# NEUE EUROPÄISCHE PATENTSCHRIFT

(11) **EP 0 722 917 B2**
(45) Veröffentlichungstag und Bekanntmachung des Hinweises auf die Entscheidung über den Einspruch: **16.04.2003**
(45) Hinweis auf die Patenterteilung: 04.08.1999
(21) Anmeldenummer: 96100718.4
(22) Anmeldetag: 18.01.1996
(51) Int. Cl.: C04B 28/06

(54) **Dispersionspulverfliesenkleber**
Tiling glue of dispersion powder type
Colle pour carreaux de type poudre de dispersion

(30) Priorität: 18.01.1995 DE 29500747 U
(43) Veröffentlichungstag der Anmeldung: 24.07.1996
(73) Patentinhaber: PCI Augsburg GmbH, 86159 Augsburg (DE)
(72) Erfinder: Müller, Paul, D-86159 Augsburg (DE); Ganswindt, Lothar, D-86343 Königsbrunn (DE); Fliesser, Brigitte, A-8605 Kapfenberg (AT)
(74) Vertreter: Kindler, Matthias, Dr. Dipl.-Chem.

(56) Entgegenhaltungen:
- EP-A- 0 573 847
- DE-A- 2 534 564
- DE-A- 3 937 431
- GB-A- 1 498 297
- GB-A- 2 069 477
- US-A- 5 366 550
- Brochüre PCI Everflex, Juni 1994
- Derwent Abstract von JP-A-04114943, 31.08.90
- Derwent Abstract von JP-A-9300644, 24.03.93

## Beschreibung

Die Erfindung betrifft einen Dispersionspulvenliesenkleber und seine Verwendung zum Verkleben von Keramik auf jungem Estrich. Dieser Fliesenkleber ist insbesondere beim Verlegen von Fliesen und Platten auf noch jungen Zementestrichen geeignet.

Fliesen und Platten als Bodenbelag werden in der Praxis meistens nach dem Dünnbettverfahren verlegt. Dabei werden die Fliesen - der Begriff Fliesen schließt im nachfolgenden Fliesen und Platten, insbesondere auf keramischer Basis ein - im Dünnbettverfahren auf einen entsprechend vorbereiteten Untergrund, z. B. einem ausgehärteten Zementestrich verlegt. Dabei ist es wesentlich, daß der Zementestrich im wesentlichen ausgehärtet ist, was in der Praxis und unter normalen Witterungsbedingungen mindestens 28 Tage dauert. Beim Aushärtungsprozeß kommt es zu einer Volumenreduktion des Zementestrichs durch Hydratation und Schwund. Während dieser Zeit ist das Verlegen von Fliesen auf dem Estrich mit erheblichem Risiko belastet.
Die auf einem solchen Estrich verlegte Fliesenkeramik ist starr und nicht verformbar. Eine Volumenänderung des Estrichs kann durch die mit dem Estrich starr verbundene Keramik nicht ausgeglichen werden. Es kommt bei solchen früh mit Fliesen belegten Estrichen zu Aufwölbungen, zum Abscheren der Fliesen oder zur Rißbildung in der Fliesen-Keramik.
Es besteht deshalb ein erhebliches Bedürfnis nach einem Fliesenkleber, der auch schon auf einen nicht vollständig ausgehärteten Zementestrich aufgetragen werden kann, ohne daß die Gefahr besteht, daß die Schwindspannungen während des Aushärteprozesses des Estriches nicht vollständig aufgenommen und kompensiert werden.

Fliesenkleber in Pulverform, die am Einsatzort vom Verbraucher mit Wasser angemacht werden, sind bekannt.
Ein wesentlicher Bestandteil dieser Fliesenkleber sind neben einem hohem Anteil an Füllstoffen als Klebemittel dienende Kunststoffdispersionen, sowie gegebenenfalls weitere Anteile an Weichmachern, Abbindebeschleunigern und dergleichen.

Diese Fliesenkleber führen zu mehr oder weniger starrem Verbund zwischen Estrich und Fliese. Der Spannungsabbau solcher Kleber ist gering. Sie sind deshalb zur Verlegung von Fliesen auf jungen Estrichen nicht geeignet.

Fliesenkleber auf Basis flüssiger Kunstharzdispersionen sind ebenfalls bekannt. Diese bestehen im wesentlichen aus einer Kunstharzdispersion als Bindemittel sowie aus Füllstoffen, Weichmachern und Verdickern. Sie können zu einem plastischen Verbund zwischen Estrich und Fliesenbelag führen. Der Verbund wird durch Austrocknung erreicht. Die Austrocknung ist jedoch durch Einschluß des Klebers durch den Fliesenbelag und den hohen Wassergehalt des noch jungen Estrichs behindert. Ein solcher Klebetyp ist daher ebenfalls nicht geeignet.

Aufgabe der vorliegenden Erfindung ist es deshalb, einen Fliesenkleber zur Verfügung zu stellen, der in Pulverform auf den Markt kommt, vom Verbraucher unmittelbar vor dem Verbrauch in einfacher Weise mit Wasser zu einer streich- und fließfähigen Dispersion angemacht werden kann, der hoch plastisch ist und einen raschen Verbund gewährleistet und der somit auf noch jungen Zementestrichen zum Verlegen von Fliesen geeignet ist.

Diese Aufgabe wird durch den Dispersionspulverfliesenkleber der Ansprüche 1-5 gelöst. Dieser Dispersionspulverfliesenkleber wird erfindungsgemäß zum Verkleben von Keramik auf jungem Estrich verwendet.

Die wesentlichen Komponenten in dem Dispersionspulverfliesenkleber sind, jeweils bezogen auf 100 Gew.-Teile:

Dispersionspulver, das in einer Menge von 7 bis 21 Teilen, vorzugsweise 8 bis 15 Teilen in der Mischung vorliegt. Das Dispersionspulver besteht aus einer Basis von Kunststoffdispersionen, die in geeigneter Weise, vorzugsweise durch Sprühtrocknen getrocknet wurden. Diese Kunststoffdispersionen können aus geeigneten Homo- oder Copolymeren oder Abmischungen derselben aufgebaut sein. Geeignete Copolymere sind beispielsweise Copolymere aus Ethylen-Vinylacetat (EVA), Vinylacetat-Versatat, Polyacrylate und -Methacrylate von Acrylsäureestern unterschiedlicher Kettenlänge etc. Solche Dispersionspulver auf Basis von getrockneten Kunststoffdispersionen sind im Handel erhältlich.

Ein weiterer wesentlicher Bestandteil ist Zement, der in einem Anteil von 7 bis 17 Teilen, vorzugsweise 8 bis 13 Teilen vorliegt. Dieser Zement kann Portlandzement oder Aluminatzement sein, bevorzugt wird aber eine Mischung aus Portlandzement, z.B., bezogen auf die Gesamtmischung von 5 bis 8 Teilen Portlandzement und 3 bis 5 Teilen Aluminatzement.

Von Bedeutung ist weiterhin, daß das Gewichtsverhältnis von Kunststoffdispersionspulver und Zement im Bereich von 0,4 bis 3,0 liegt.

Ein aus Celluloseetherderivaten ausgewähltes Verdickungsmittel ist in einer Menge von 0,5 bis 2 Teilen, vorzugsweise 0,8 bis 1,5 Teilen, in der Mischung vorhanden.

Beispiele für Celluloseetherderivate sind Hydroxymethylcellulose, Methylcellulose, Hydroxyethylcellulose, Carboxymethylcellulose.

Der Weichmacher liegt in einer Menge von 1,5 bis 17 Teilen in der Mischung vor. Die Menge richtet sich im wesentlichen nach der Art des verwendeten Kunststoffdispersionspulvers, dessen Menge und auch nach der Art des verwendeten Weichmachers. Ein bevorzugter Weichmacher ist Caprolactam. Der Weichmacher wird vorzugsweise in einer Menge von 2,0 bis 10 Teilen eingesetzt.

Weiterhin enthält die Mischung einen Abbindebeschleuniger in einer Menge von 0,2 bis 2, vorzugsweise 0,5 bis 1,5 Teilen. Geeignete Abbindebeschleuniger sind beispielsweise Na₂CO₃, NaHCO₃, NaAlO₂, K₂CO₃, Al(SO₄)₃, Ca(OOCH)₂, N(C₂H₅O)₃, LiCO₃ oder Kombinationen hiervon.

Den größten Teil der Mischung machen die Füllstoffe aus. Diese liegen in einer Menge von mindentens 50 Teilen, vorzugsweise 60 bis 80 Teilen vor. Geeignete Füllstoffe sind beispielsweise Quarzsand, Kreide und Talkum.

Ferner enthält der erfindungsgemäße Dispersionspulverfliesenkleber in einer bevorzugten Ausführungsform vorzugsweise 0,5-2 Gew.-Teile eines weiteren Verdickungsmittels, das aus quellfähigen Silikaten, wie z.B. Schichtsilikaten (z.B. Bentonite, Alapulgite, Kaolinite) und Polyacrylaten oder Kombinationen hiervon ausgewählt wird.

Die in der Mischung enthaltenen Bestandteile können in üblicher Weise vermischt und dann zu entsprechenden Gebinden abgefüllt werden.

Bei ihrer Verwendung werden sie mit Wasser angemacht, wobei pro Kilogramm der Mischung ca. 0,35 I Leitungswasser verwendet werden. Die Zugabe des Wassers erfolgt unter kräftigem Rühren mit entsprechend geeigneten Rührvorrichtungen, z.B. einem Korbrührer, den man an eine langsam laufende Bohrmaschine (ca. 400 Umdrehungen/min.) anschließen kann.

Erfindungsgemäße Mischungen haben eine Reifezeit von ca. 5 Minuten. Die klebeoffene Zeit beträgt ca. 20 Minuten und die Verarbeitungszeit ca. 1 Stunde. Sie härten sehr schnell aus, so daß entsprechend verlegte Fliesen schon nach ca. 24 Stunden voll begehbar und voll belastbar nach ca. 7 Tagen sind.

Das zum Verlegen der Fliesen verwendete Dünnbett hat eine Dicke, die im allgemeinen 5 mm nicht übersteigt. Die Bearbeitung des Dünnbettes erfolgt in üblicher Weise mit einer entsprechenden Zahntraufel.

Der Untergrund muß fest, sauber und tragfähig sein. Frische Anhydrit- bzw. Gipsestriche sollen nicht mehr als ca. 0,5% Restfeuchte enthalten und müssen vor Verlegung grundiert werden.

Selbstverständlich kann man den erfindungsgemäßen Fliesenkleber auch zum Aufbringen von Fliesen auf anderen Untergründen als Estrich verwenden, beispielsweise kann man als Untergrund auch trockene, festverschraubte Holzspanplatten oder fest haftendes Parkett oder Holzdielen verwenden.

Der erfindungsgemäße Dispersionspulverfliesenkleber kann auch als Verfugungsmasse bei den verlegten Fliesen verwendet werden.

### Beispiele:

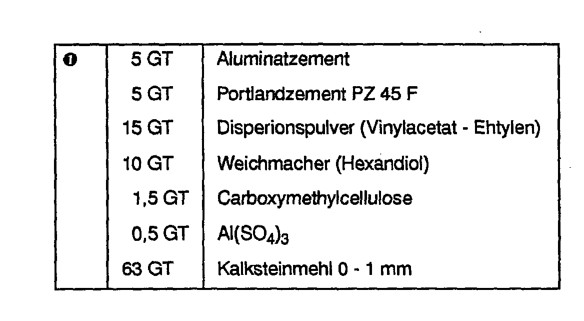

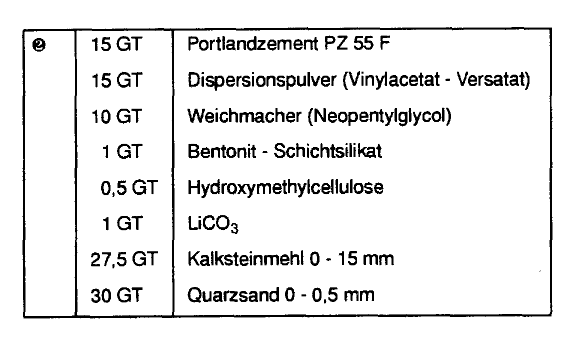

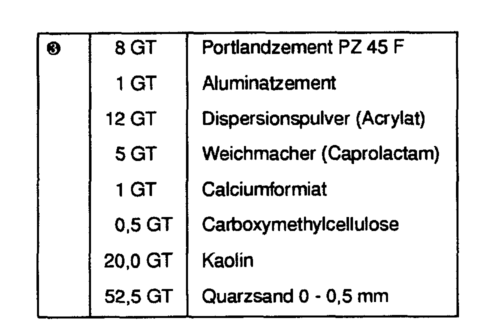

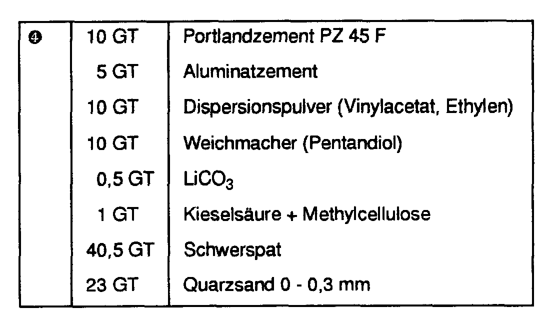

| | | |
|---|---|---|
| B | 50 GT | Aluminatzement |
| | 20 GT | Kalksteinmehl |
| | 15 GT | Dispersionspulver (Vinylacetat - Ethylen) |
| | 1 GT | Methylcellulose |
| | 14 GT | Quarzsand |

Hier ist das Verhältnis Zement - Dispersionspulver zu groß. Der Kleber ist zu wenig plastisch.

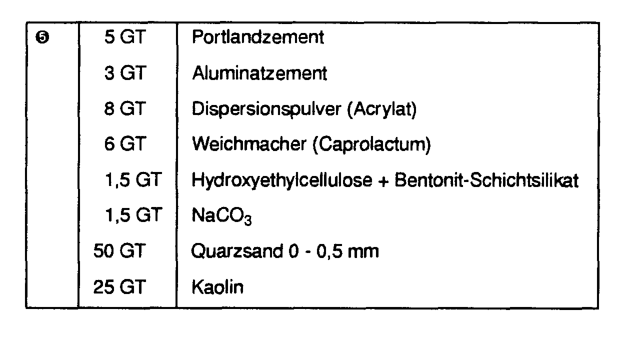

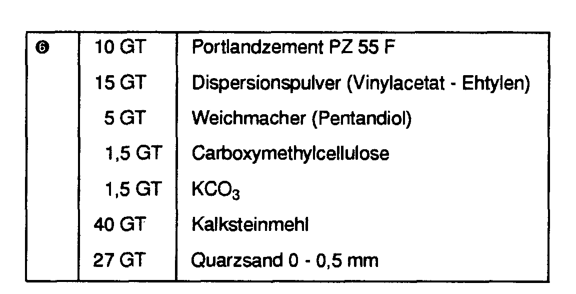

Beispiele von Fliesenklebern (handelsüblich), die nicht geeignet sind:

| | | |
|---|---|---|
| B | 38 GT | Portlandzement |
| | 5 GT | Dispersionspulver (Vinylacetat - Ethylen) |
| | 53 GT | Quarzsand |
| | 3 GT | Kalksteinmehl |
| | 1 GT | Hydroxyethylcellulose |

## Patentansprüche

1. Dispersionspulverfliesenkleber in Pulverform für keramische Platten und Fliesen, der jeweils bezogen auf 100 Gew.-Teile, enthält
- Kunststoffdispersionspulver 7 bis 21 Teile
- Zement 7 bis 17 Teile
- ein Verdickungsmittel ausgewählt aus Celluloseetherderivaten, 0,5 bis 2 Teile
- Weichmacher 1,5 bis 17 Teile
- Abbindebeschleuniger 0,2 bis 2 Teile
- Füllstoffe mindestens 50 Teile,
und worin das Gewichtsverhältnis
Kunststoffdispersionspulver zu Zement im Bereich von 0,4 bis 3,0 liegt.

2. Dispersionspulverfliesenkleber gemäß Anspruch 1, **dadurch gekennzeichnet, dass** als Zement eine Mischung aus Portlandzement und Aluminatzement vorliegt.

3. Dispersionspulverfliesenkleber gemäß Anspruch 1, **dadurch gekennzeichnet, dass** das Dispersionspulver aus einer getrockneten Kunststoffdispersion auf Basis von Ethylenvinylacetat, Vinylacetat-Versatat oder Polyacrylaten aufgebaut ist.

4. Dispersionspulverfliesenkleber gemäß einem der vorhergehenden Ansprüche, **dadurch gekennzeichnet, daß** zusätzlich als Verdickungsmittel quellfähige Silikate und/oder Polyacrylate in Gewichtsmengen von 0,5 bis 2 Teilen vorliegen.

5. Dispersionspulverfliesenkleber gemäß einem der vorhergehenden Ansprüche, **dadurch gekennzeichnet, daß** als Füllstoff Kreide, Quarzsand, Talkum alleine oder im Gemisch vorliegen.

6. Verwendung eines Dispersionspulverfliesenkleber gemäß einem der Ansprüche 1-5 zum Verkleben von Keramik auf jungem Estrich.

## Claims

1. Dispersion powder tile adhesive in powder form for ceramic plates and tiles which with reference to 100 parts by weight in each case contains:
- 7 to 21 parts of plastic dispersion powder
- 7 to 17 parts of cement
- thickener selected from 0.5 to 2 parts of cellulose ether derivatives
- 1.5 to 17 parts of plasticizer
- 0.2 to 2 parts of setting accelerator
- at least 50 parts of fillers
and wherein the weight ratio of plastic dispersion powder to cement lies in the range of 0.4 to 3.0.

2. Dispersion powder tile adhesive according to Claim 1, **characterised in that** the cement is present in the form of a mixture of Portland cement and aluminate cement.

3. Dispersion powder tile adhesive according to Claim 1, **characterised in that** the dispersion powder is built up from a dried plastic dispersion based on ethylenevinyl acetate, vinyl acetate-versatate or polyacrylates.

4. Dispersion powder tile adhesive according to one of the preceding claims, **characterised in that** as a further thickening agent silicates capable of swelling and/or polyacrylates are present in quantities by weight of 0.5 to 2 parts.

5. Dispersion powder tile adhesive according to one of the preceding claims, **characterised in that** chalk, quartz sand, talcum on its own or in a mixture are present as filler.

6. Use of a dispersion powder tile adhesive according to one of Claims 1-5 for bonding ceramics on to fresh screed.

## Revendications

1. Colle pour carreaux, de type poudre de dispersion, se présentant sous forme pulvérulente, pour des plaques et des carreaux céramique, contenant chaque fois, rapportés à 100 % en poids :
- 7 à 21 parties de poudre de dispersion de matière synthétique
- 7 à 17 parties de ciment
- 0,5 à 2 parties d'un épaississant choisi parmi les dérivés d'éther cellulose
- 1,5 à 17 parties de plastifiant
- 0,2 à 2 parties d'un accélérateur de prise
- au moins 50 parties de charges,
et, dans lequel le rapport de poids entre la poudre de dispersion de matière synthétique et le ciment est compris dans la plage allant de 0,4 à 3,0.

2. Colle pour carreaux, de type poudre de dispersion selon la revendication 1, **caractérisée en ce que** l'on a, à titre de ciment, un mélange constitué de ciment Portland et de ciment d'aluminate.

3. Colle pour carreaux, de type poudre de dispersion selon la revendication 1, **caractérisée en ce que** la poudre de dispersion est constituée d'une dispersion de matière synthétique séchée, à base de vinyle acétate d'éthylène, de versatate d'acétate de vinyle ou de polyacrylates.

4. Colle pour carreaux, de type poudre de dispersion selon l'une des revendications précédentes, **caractérisée en ce que** l'on utilise additionnellement épaississant des silicates gonflants et/ou des polyacrylates, en des quantités en poids de 0,5 à 2 parties.

5. Colle pour carreaux, de type poudre de dispersion selon l'une des revendications précédentes, **caractérisée en ce que** l'on utilise comme charge de la craie, du sable de quartz, du talc, seuls ou en mélange.

6. Utilisation d'une colle pour carreaux, de type poudre de dispersion selon l'une des revendications 1 à 5, pour le collage de céramique sur un enduit frais.
